# EUROPÄISCHE PATENTSCHRIFT

(11) **EP 3 004 675 B1**
(45) Veröffentlichungstag und Bekanntmachung des Hinweises auf die Patenterteilung: **04.10.2017**
(21) Anmeldenummer: 14730070.1
(22) Anmeldetag: 02.05.2014
(51) Int. Cl.: F16D 1/10

(54) **VERBINDUNGSELEMENT FÜR EINE WELLE-NABE-VERBINDUNG, INSBESONDERE ZUR DREHMOMENTÜBERTRAGUNG IN EINEM ANTRIEBSSTRANG EINES KRAFTFAHRZEUGS, SOWIE VERWENDUNG EINES DERARTIGEN VERBINDUNGSELEMENTS**
CONNECTION ELEMENT FOR A SHAFT-HUB CONNECTION, IN PARTICULAR FOR TORQUE TRANSMISSION IN A POWER TRAIN OF A MOTOR VEHICLE, AND USE OF SUCH A CONNECTION ELEMENT
ÉLÉMENT DE RACCORDEMENT PERMETTANT DE RACCORDER UN ARBRE ET UN MOYEU, EN PARTICULIER POUR LA TRANSMISSION D'UN COUPLE DANS LA CHAÎNE CINÉMATIQUE D'UN VÉHICULE AUTOMOBILE, ET UTILISATION DUDIT ÉLÉMENT DE RACCORDEMENT

(30) Priorität: 03.06.2013 DE 102013210240
(43) Veröffentlichungstag der Anmeldung: 13.04.2016
(73) Patentinhaber: Schaeffler Technologies AG & Co. KG, 91074 Herzogenaurach (DE)
(72) Erfinder: HIMMELREICH, Peter, 77948 Friesenheim (DE); HAGMAYER, Achim, 77830 Bühlertal (DE)
(86) Internationale Anmeldenummer: PCT/DE2014/200194
(87) Internationale Veröffentlichungsnummer: WO 2014/194901

(56) Entgegenhaltungen:
- WO-A1-2008/046379
- DE-A1-102010 035 451
- US-A- 2 845 809
- US-A1- 2007 048 082

## Beschreibung

Die Erfindung betrifft eine Verbindungselement für eine Welle-Nabe-Verbindung, insbesondere zur Drehmomentübertragung in einem Antriebsstrang eines Kraftfahrzeugs, sowie eine Verwendung eines derartigen Verbindungselements gemäß dem Oberbegriff des Patentanspruchs 1, mit dessen Hilfe eine Welle-Nabe-Verbindung zur Drehmomentübertragung in einem Antriebsstrang eines Kraftfahrzeugs ausgebildet werden kann.

Aus DE 10 2010 054 283 A1 ist eine Welle-Nabe-Verbindung zur Drehmomentübertragung in einem Antriebsstrang eines Kraftfahrzeugs bekannt, bei dem eine Welle mit einer Nabe über eine Steckverzahnung verbunden ist. Die Nabe weist zwei koaxial zueinander angeordnete Scheiben auf, die im eingesteckten Zustand der Welle in der Nabe mit Hilfe radial außerhalb zu der Welle angeordneter metallischer Spiralfedern im Unfangsrichtung zueinander verspannt sind, so dass die Verzahnung der Welle an beiden in Umfangsrichtung weisenden Zahnflanken an den Scheiben der Nabe anliegt, wodurch ein toleranzbedingtes Zahnspiel in Umfangsrichtung eliminiert werden kann.

Aus der US 2007/048,082 A1 ist ein Verbindungselement gemäß dem Oberbegriff des Patentanspruchs 1 bekannt.

Es besteht ein ständiges Bedürfnis geräuscharme Welle-Nabe-Verbindungen für einen Antriebsstrang eines Kraftfahrzeugs konstruktiv einfach und bauraumsparend auszugestalten.

Es ist die Aufgabe der Erfindung Maßnahmen aufzuzeigen, die eine konstruktiv einfach und bauraumsparend ausgestaltete geräuscharme Welle-Nabe-Verbindungen für einen Antriebsstrang eines Kraftfahrzeugs ermöglichen.

Die Lösung der Aufgabe erfolgt erfindungsgemäß durch ein Verbindungselement für eine Welle-Nabe-Verbindung mit den Merkmalen des Anspruchs 1 sowie eine Verwendung eines Verbindungselements mit den Merkmalen des Anspruchs 10. Bevorzugte Ausgestaltungen der Erfindung sind in den Unteransprüchen angegeben, die jeweils einzeln oder in Kombination einen Aspekt der Erfindung darstellen können.

Erfindungsgemäß ist ein Verbindungselement für eine Welle-Nabe-Verbindung, insbesondere zur Drehmomentübertragung in einem Antriebsstrang eines Kraftfahrzeugs, vorgesehen mit einem eine erste Verzahnung aufweisenden ersten Verzahnungselement zur Ausbildung einer Steckverzahnung mit einem Gegenverzahnungselement, einem eine zweite Verzahnung aufweisenden zweiten Verzahnungselement zur Ausbildung einer Steckverzahnung mit dem selben Gegenverzahnungselement und einem mit dem ersten Verzahnungselement und dem zweiten Verzahnungselement verbundenen Elastomerkörper, wobei der Elastomerkörper bei einer fluchtenden Ausrichtung der ersten Verzahnung zur zweiten Verzahnung ein Rückstellmoment in Umfangsrichtung auf das erste Verzahnungselement und/oder auf das zweite Verzahnungselement ausübt.

Durch den Elastomerkörper kann das erste Verzahnungselement mit dem zweiten Verzahnungselement, beispielsweise durch eine bauraumsparende Elastomerschicht, in Umfangsrichtung derart versetzt verbunden werden, dass die erste Verzahnung und die zweite Verzahnung nicht miteinander fluchten. In Axialrichtung betrachtet wird ein Zahn der ersten Verzahnung nicht vollständig von einem Zahn der zweiten Verzahnung abgedeckt, wobei stattdessen ein Teil des jeweils anderen Zahns in Umfangsrichtung aus dem abgedeckten Bereich übersteht. Wenn das Verbindungselement mit dem Gegenverzahnungselement zur Ausbildung einer eine Steckverzahnung aufweisenden Well-Nabe-Verbindung verbunden wird, kann das erste Verzahnungselement und das zweite Verzahnungselement in eine stärker fluchtende Winkellage relativ zueinander verdreht werden, in welcher in Axialrichtung betrachtet ein Überdeckungsgrad der Zähne der ersten Verzahnung und der zweiten Verzahnung größer ist und ein geringerer Anteil des jeweils anderen Zahns in Umfangsrichtung übersteht. Wenn eine Gegenverzahnung des Gegenverzahnungselement sowohl mit der ersten Verzahnung des ersten Verzahnungselements als auch mit der zweiten Verzahnung des zweiten Verzahnungselements kämmt, ist das erste Verzahnungselement im Vergleich zur Ausgangslage zum zweiten Verzahnungselement in Umfangsrichtung verdreht, so dass der die Verzahnungselemente verbindende Elastomerkörper elastisch verformt ist und ein Rückstellmoment auf die Verzahnungselemente ausübt. Aufgrund dieses Rückstellmoments liegt das erste Verzahnungselement mit einer in eine erste Umfangsrichtung weisenden Zahnflanke an der Gegenverzahnung des Gegenverzahnungselement an, während gleichzeitig das zweite Verzahnungselement mit einer in einer entgegen der ersten Umfangsrichtung gerichteten zweiten Umfangsrichtung weisenden Zahnflanke an der Gegenverzahnung des Gegenverzahnungselement anliegt. Ein toleranzbedingtes Zahnspiel in Umfangsrichtung des Verbindungselements mit dem Gegenverzahnungselement kann dadurch eliminiert werden, so dass sich eine im Wesentlichen spielfreie Welle-Nabe-Verbindung ergeben kann. Dadurch können insbesondere Klappergeräusche auch bei Lastwechseln vermieden werden. Zudem kann der Elastomerkörper als Dämpfer wirken, mit dessen Hilfe Drehschwingungen gedämpft werden können. Hierbei wird die Erkenntnis ausgenutzt, dass zum Ausgleich eines toleranzbedingten Zahnspiels in Umfangsrichtung ein lediglich geringer Versatz des ersten Verzahnungselements zum zweiten Verzahnungselement in eine nicht fluchtende Stellung der jeweiligen Verzahnungen ausreichend ist, so dass ein entsprechend dünn und bauraumsparender Elastomerkörper hierfür ausreichend ist und Spiralfedern oder andere metallische Federelemente mit einem entsprechend größeren Bauraumbedarf und entsprechend konstruktiv aufwändigen Befestigungskonstruktionen vermieden werden können. Durch die versetzte Anbindung der Verzahnungselemente über den Elastomerkörper, kann ein toleranzbedingtes Zahnspiel in Umfangsrichtung automatisch ausgeglichen werden, wodurch eine konstruktiv einfach und bauraumsparend ausgestaltete geräuscharme Welle-Nabe-Verbindungen für einen Antriebsstrang eines Kraftfahrzeugs ermöglicht ist.

Das Verzahnungselement kann eine Welle der Welle-Nabe-Verbindung und/oder eine Nabe der Welle-Nabe-Verbindung ausbilden. Das erste Verzahnungselement kann im Wesentlichen koaxial zum zweiten Verzahnungselement angeordnet sein. Ein schwerkraftbedingter und/oder toleranzbedingter Achsversatz des ersten Verzahnungselements zum zweiten Verzahnungselement kann bei der Montage mit dem Gegenverzahnungselement automatisch ausgeglichen werden, so dass es nicht erforderlich ist das erste Verzahnungselement mit dem zweiten Verzahnungselement über zusätzliche Zentriermittel zu zentrieren. Die Gegenverzahnung des Gegenverzahnungselements und/oder die erste Verzahnung und/oder die zweite Verzahnung kann eine im Unfangsrichtung wirkende Einführungsschräge aufweisen, so dass bei der Montage das erste Verzahnungselement automatisch zum zweiten Verzahnungselement entgegen eines sich aufbauenden Rückstellmoments des Elastomerkörpers verdreht werden kann. Der Elastomerkörper kann gleichzeitig die Funktionen übernehmen das erste Verzahnungselement mit dem zweiten Verzahnungselement zu verbinden und einen Toleranzausgleich in Umfangsrichtung mit dem Gegenverzahnungselement herbeizuführen. Insbesondere ist das erste Verzahnungselement mit dem zweiten Verzahnungselement ausschließlich über den Elastomerkörper verbunden. Die geometrische Dimensionierung des Elastomerkörpers kann derart erfolgen, dass der Elastomerkörper über eine vergleichsweise großen Oberfläche, beispielsweise durch Kleben, mit den Verzahnungselementen verbunden ist, um eine sichere Verbindung der Verzahnungselemente bereitzustellen, wobei der Elastomerkörper eine vergleichsweise dünne Dicke aufweist, um über Scherkräfte innerhalb des Elastomerkörpers im montierten Zustand mit dem Gegenverzahnungselement ein ausreichendes Rückstellmoment bereitzustellen. Der Elastomerkörper kann insbesondere in Form einer Schicht ausgestaltet sein.

Insbesondere ist der Elastomerkörper durch Vulkanisieren mit dem ersten Verzahnungselement und/oder mit dem zweiten Verzahnungselement verbunden. Dadurch lässt sich schnell und einfach eine feste Verbindung des Elastomerkörpers mit dem ersten Verzahnungselement und/oder mit dem zweiten Verzahnungselement erreichen, wobei zusätzliche mechanischen Befestigungsmittel und/oder für einen Formschluss speziell ausgestaltete Bereiche vermieden werden können. Insbesondere kann der Elastomerkörper in einem vergleichsweise harten Zustand angeliefert und montiert werden, wobei der Elastomerkörper seine beabsichtigte Elastizität erst während des Vulkanisierens erhält, insbesondere wenn während des Vulkanisierens unter Wärmezufuhr Polymere des Elastomerkörpers sich miteinander vernetzen. Vorzugsweise wird beim Vulkanisieren ein Katalysator zugegeben, mit dessen Hilfe die beabsichtigte Elastizität sehr genau eingestellt werden kann.

Vorzugsweise besteht der Elastomerkörper ausschließlich aus einem elastomeren Kunststoffmaterial. Die Materialeigenschaften des Elastomerkörpers können dadurch konstant und vorhersehbar sein. Insbesondere können metallische Bestandteile, die beispeisspielsweise mit dem Elastomer umspritz werden müssten und/oder verkeilen könnten, vermieden werden. Geeignete Materialien für den Elastomerkörper sind beispielsweise Naturkautschuk, Silikonkautschuk, Ethylen-Propylen-Dien-Kautschuk (EPDM), Ethylenvinylacetat (EVA).

Besonders bevorzugt ist der Elastomerkörper in Axialrichtung zwischen dem ersten Verzahnungselement und dem zweiten Verzahnungselement angeordnet. Das erste Verzahnungselement und das zweite Verzahnungselement können dadurch über die Dicke des Elastomerkörpers in axialer Richtung zueinander beabstandet sein, so dass ein Anschlagen und/oder Schleifen der Verzahnungselemente aneinander bei einer Relativbewegung in Umfangsrichtung vermieden ist.

Insbesondere ist der Elastomerkörper im Wesentlichen als durchgängiges Kontinuum ausgestaltet, wobei der Elastomerkörper insbesondere einen in Umfangsrichtung durchgängig kontinuierlichen geschlossenen Ringkörper ausbildet. Der Elastomerkörper kann insbesondere im Wesentlichen homogen und/oder im Wesentlichen ohne Lufteinschlüsse im befestigten Zustand ausgebildet sein. Die Materialeigenschaften des Elastomerkörpers können dadurch konstant und vorhersehbar sein.

Vorzugsweise weisen die erste Verzahnung und die zweite Verzahnung eine mittlere Zahnbreite b auf, wobei im entspannten Zustand des Elastomerkörpers im Vergleich zu einer fluchtenden Anordnung die erste Verzahnung um eine Strecke s in Umfangsrichtung zur zweiten Verzahnung versetzt angeordnet ist, wobei insbesondere 0,05 ≤ s/b ≤ 1,00, vorzugsweise 0,25 ≤ s/b ≤ 0,75 und besonders bevorzugt 0,35 ≤ s/b ≤ 0,50 gilt. Dadurch lässt sich bei gleichem Materialeinsatz für den Elastomerkörper im montierten Zustand ein vergleichsweise hohes Rückstellmoment einstellen, das auch bei plötzlichen Laststößen ("Impacts") ein Klappern vermeiden kann.

Besonders bevorzugt ist die erste Verzahnung im Vergleich zu einer fluchtenden Anordnung zu der zweiten Verzahnung um einen Winkel α in Umfangsrichtung verdreht, wobei 0,10° ≤ α ≤ 5,0°, vorzugsweise 0,25° ≤ α ≤ 2,5°, weiter bevorzugt 0,50° ≤ α ≤ 1,5° und besonders bevorzugt α = 1,0° ± 0,25° gilt. Bei einem derartigen Winkel lässt sich ein toleranzbedingtes Zahnspiel in Umfangsrichtung ausgleichen ohne die Montage des Gegenverzahnungselements zu erschweren.

Die Erfindung betrifft ferner eine Welle-Nabe-Verbindung, insbesondere zur Drehmomentübertragung in einem Antriebsstrang eines Kraftfahrzeugs, mit einer Welle und einer über eine Steckverzahnung mit der Welle verbundenen Nabe, wobei die Welle und/oder die Nabe als Verbindungselement ausgestaltet ist, das wie vorstehend beschrieben aus- und weitergebildet sein kann. Durch die versetzte Anbindung der Verzahnungselemente über den Elastomerkörper, kann ein toleranzbedingtes Zahnspiel in Umfangsrichtung automatisch ausgeglichen werden, wodurch eine konstruktiv einfach und bauraumsparend ausgestaltete geräuscharme Welle-Nabe-Verbindungen für den Antriebsstrang des Kraftfahrzeugs ermöglicht ist.

Insbesondere übt der Elastomerkörper ein Rückstellmoment M_{R} in Umfangsrichtung auf die Welle und/oder die Nabe aus, wobei bezogen auf eine zu erwartende maximale Drehmomentschwankung ΔM 0,01 ≤ M_{R}/ΔM ≤ 2,00, insbesondere 0,05 ≤ M_{R}/ΔM ≤ 1,00, vorzugsweise 0,10 ≤ M_{R}/ΔM ≤ 0,50 und besonders bevorzugt 0,20 ≤ M_{R}/ΔM ≤ 0,25 gilt. Dadurch kann der Elastomerkörper auch bei einer Schwankung des zu übertragenen Drehmoments und/oder bei plötzlichen Laststößen ("Impacts") ein Klappern vermeiden.

Die Erfindung betrifft ferner einen Antriebsstrang eines Kraftfahrzeugs mit einer Welle-Nabe-Verbindung, die wie vorstehend beschrieben aus- und weitergebildet sein kann, zur Verbindung rotierender Teile, insbesondere zur Verbindung einer Antriebswelle eines Kraftfahrzeugmotors mit einem Drehschwingungsdämpfer und/oder mit einer Kupplung, zur Verbindung eines Drehschwingungsdämpfers mit einer Kupplung und/oder zur Verbindung einer Kupplungsscheibe einer Kupplung mit einer Getriebeeingangswelle eines Kraftfahrzeuggetriebes. Durch die versetzte Anbindung der Verzahnungselemente über den Elastomerkörper, kann ein toleranzbedingtes Zahnspiel in Umfangsrichtung automatisch ausgeglichen werden, wodurch eine konstruktiv einfach und bauraumsparend ausgestaltete geräuscharme Welle-Nabe-Verbindungen für den Antriebsstrang des Kraftfahrzeugs ermöglicht ist.

Die Erfindung betrifft ferner eine Verwendung eines Verbindungselements, das wie vorstehend beschrieben aus- und weitergebildet sein kann, in einer Welle-Nabeverbindung, die insbesondere wie vorstehend beschrieben aus- und weitergebildet sein kann, zur Drehmomentübertragung in einem Antriebsstrang eines Kraftfahrzeugs, der insbesondere wie vorstehend beschrieben aus- und weitergebildet sein kann. Durch die versetzte Anbindung der Verzahnungselemente über den Elastomerkörper, kann ein toleranzbedingtes Zahnspiel in Umfangsrichtung automatisch ausgeglichen werden, wodurch eine konstruktiv einfach und bauraumsparend ausgestaltete geräuscharme Welle-Nabe-Verbindungen für den Antriebsstrang des Kraftfahrzeugs ermöglicht ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine schematische Schnittansicht eines Verbindungselements,
- Fig. 2:: eine schematische perspektivische Ansicht des Verbindungselements aus Fig. 1 und
- Fig. 3:: eine schematische Draufsicht des Verbindungselements aus Fig. 1.

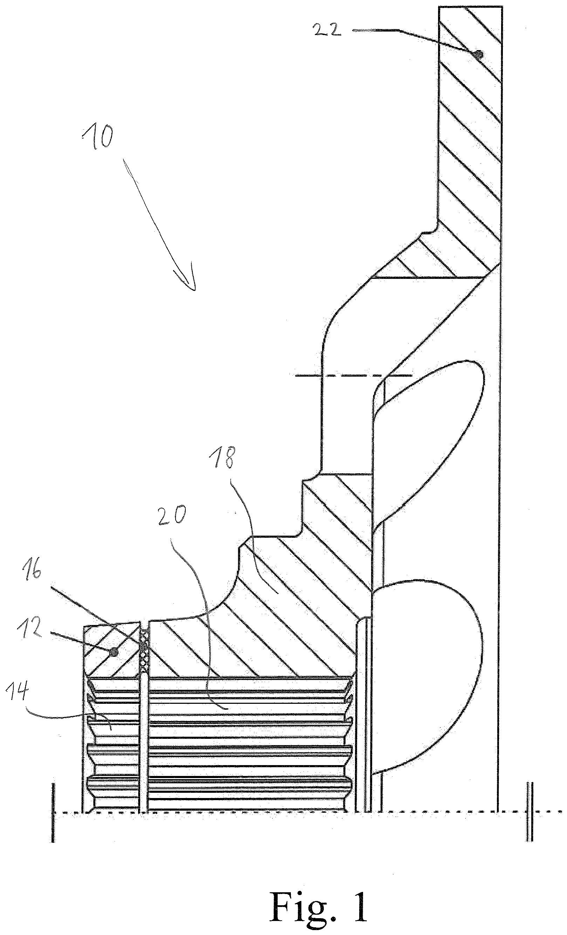

Das in Fig. 1 exemplarisch als Nabe einer Welle-Nabe-Verbindung ausgestaltete Verbindungselement 10 weist ein erstes Verzahnungselement 12 auf, das eine als Innenverzahnung ausgestaltete erste Verzahnung 14 aufweist. Das erste Verzahnungselement 12 ist über einen als ringförmige Schicht ausgestalteten Elastomerkörper 16 mit einem zweiten Verzahnungselement 18 relativ gegen eine von dem Elastomerkörper 16 aufbringbaren Rückstellkraft verdrehbar verbunden, wobei das zweite Verzahnungselement 18 eine als Innenverzahnung ausgestaltete zweite Verzahnung 20 aufweist. Der Elastomerkörper 16 kann an aufeinander zu weisenden axialen Stirnseiten des ersten Verbindungselements 12 und des zweiten Verbindungselements 18 aufvulkanisiert sein.

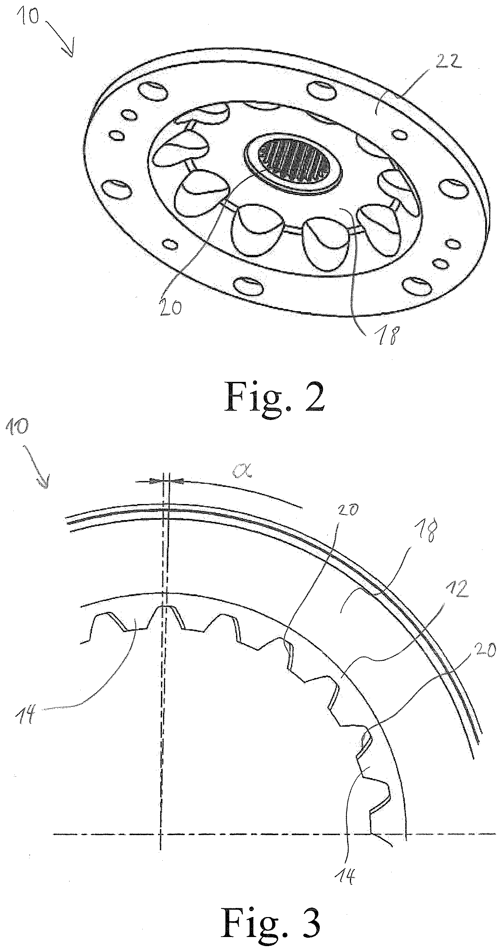

Über die erste Verzahnung 14 und die zweite Verzahnung 20 kann das Verbindungselement 10 beispielsweise eine als Steckverzahnung ausgebildete Welle-Nabe-Verbindung mit einer Getriebeeingangswelle eines Kraftfahrzeugs eingehen. Im in Fig. 2 dargestellten Ausführungsbeispiel kann das zweite Verbindungselement 20 einen Befestigungsflansch 22 aufweisen, der beispielsweise einen Ausgangsflansch eines Drehschwingungsdämpfers, beispielsweise eines Scheibendämpfers einer Kupplungsscheibe einer Reibungskupplung, ausbilden kann.

Wie in Fig. 3 dargestellt kann die erste Verzahnung 14 des ersten Verzahnungselements 12 im entspannten Zustand des Elastomerkörpers 16, wenn der Elastomerkörper 16 kein Rückstellmoment ausübt, zu der zweiten Verzahnung 20 des zweiten Verzahnungselements 18 im Vergleich zu einer vollständig fluchtenden Relativwinkellage um einen Winkel α in Umfangsrichtung verdreht positioniert sein. Der Abstand der Zähne der ersten Verzahnung 14 zur zweiten Verzahnung 20 kann dadurch etwas geringer sein als der Zahnabstand einer Gegenverzahnung eines Gegenverzahnungselements, so dass im montierten Zustand das Gegenverzahnungselement spielfrei mit einem anliegenden Rückstellmoment des Elastomerkörpers 16 mit dem Verbindungselement 10 verbunden ist und dabei sowohl an der ersten Verzahnung 14 als auch an der zweiten Verzahnung 20 anliegt.

### Bezuctszeichenliste

- 10: Verbindungselement
- 12: erstes Verzahnungselement
- 14: erste Verzahnung
- 16: Elastomerkörper
- 18: zweites Verzahnungselement
- 20: zweite Verzahnung
- 22: Befestigungsflansch

## Patentansprüche

1. Verbindungselement für eine Welle-Nabe-Verbindung, insbesondere zur Drehmomentübertragung in einem Antriebsstrang eines Kraftfahrzeugs, mit
einem eine erste Verzahnung (14) aufweisenden ersten Verzahnungselement (12) zur Ausbildung einer Steckverzahnung mit einem Gegenverzahnungselement,
einem eine zweite Verzahnung (20) aufweisenden zweiten Verzahnungselement (18) zur Ausbildung einer Steckverzahnung mit dem selben Gegenverzahnungselement **gekennzeichnet durch** einen mit dem ersten Verzahnungselement (12) und dem zweiten Verzahnungselement (18) verbundenen Elastomerkörper (16), wobei der Elastomerkörper (16) bei einer fluchtenden Ausrichtung der ersten Verzahnung (14) zur zweiten Verzahnung (20) ein Rückstellmoment in Umfangsrichtung auf das erste Verzahnungselement (12) und/oder auf das zweite Verzahnungselement (18) ausübt.

2. Verbindungselement nach Anspruch 1 **dadurch gekennzeichnet, dass** der Elastomerkörper (16) durch Vulkanisieren mit dem ersten Verzahnungselement (12) und/oder mit dem zweiten Verzahnungselement (18) verbunden ist.

3. Verbindungselement nach Anspruch 1 oder 2 **dadurch gekennzeichnet, dass** der Elastomerkörper (16) ausschließlich aus einem elastomeren Kunststoffmaterial besteht.

4. Verbindungselement nach einem der Ansprüche 1 bis 3 **dadurch gekennzeichnet, dass** der Elastomerkörper (16) in Axialrichtung zwischen dem ersten Verzahnungselement (12) und dem zweiten Verzahnungselement (18) angeordnet ist.

5. Verbindungselement nach einem der Ansprüche 1 bis 4 **dadurch gekennzeichnet, dass** der Elastomerkörper (16) im Wesentlichen als durchgängiges Kontinuum ausgestaltet ist, wobei der Elastomerkörper (16) insbesondere einen in Umfangsrichtung durchgängig kontinuierlichen geschlossenen Ringkörper ausbildet.

6. Verbindungselement nach einem der Ansprüche 1 bis 5 **dadurch gekennzeichnet, dass** die erste Verzahnung (14) im Vergleich zu einer fluchtenden Anordnung zu der zweiten Verzahnung (20) um einen Winkel α in Umfangsrichtung verdreht ist, wobei 0,10° ≤ α ≤ 5,0°, vorzugsweise 0,25° ≤ α ≤ 2,5°, weiter bevorzugt 0,50° ≤ α ≤ 1,5° und besonders bevorzugt α = 1,0° ± 0,25° gilt.

7. Welle-Nabe-Verbindung, insbesondere zur Drehmomentübertragung in einem Antriebsstrang eines Kraftfahrzeugs, mit einer Welle und einer über eine Steckverzahnung mit der Welle verbundenen Nabe, wobei die Welle und/oder die Nabe als Verbindungselement (10) nach einem der Ansprüche 1 bis 6 ausgestaltet ist.

8. Welle-Nabe-Verbindung nach Anspruch 7 **dadurch gekennzeichnet, dass** der Elastomerkörper (16) ein Rückstellmoment M_{R} in Umfangsrichtung auf die Welle und/oder die Nabe ausübt, wobei bezogen auf eine zu erwartende maximale Drehmomentschwankung ΔM 0,01 ≤ M_{R}/ΔM ≤ 2,00, insbesondere 0,05 ≤ M_{R}/ΔM ≤ 1,00, vorzugsweise 0,10 ≤ M_{R}/ΔM 5 ≤ 0,50 und besonders bevorzugt 0,20 ≤ M_{R}/ΔM ≤ 0,25 gilt.

9. Antriebsstrang eines Kraftfahrzeugs mit einer Welle-Nabe-Verbindung nach Anspruch 7 oder 8 zur Verbindung rotierender Teile, insbesondere zur Verbindung einer Antriebswelle eines Kraftfahrzeugmotors mit einem Drehschwingungsdämpfer und/oder mit einer Kupplung, zur Verbindung eines Drehschwingungsdämpfers mit einer Kupplung und/oder zur Verbindung einer Kupplungsscheibe einer Kupplung mit einer Getriebeeingangswelle eines Kraftfahrzeuggetriebes.

10. Verwendung eines Verbindungselements (10) nach einem der Ansprüche 1 bis 6 in einer Welle-Nabeverbindung, insbesondere nach Anspruch 7 oder 8, zur Drehmomentübertragung in einem Antriebsstrang, insbesondere nach Anspruch 9 eines Kraftfahrzeugs.

## Claims

1. Connecting element for a shaft/hub connection, in particular for the transmission of torque in a drive train of a motor vehicle, having a first spline element (12) which has a first spline (14) for configuring an intermeshing spline connection with a counter-spline element, a second spline element (18) which has a second spline (20) for configuring an intermeshing spline connection with the same counter-spline element, **characterized by** an elastomer body (16) which is connected to the first spline element (12) and the second spline element (18), the elastomer body (16) exerting a restoring moment in the circumferential direction on the first spline element (12) and/or on the second spline element (18) in the case of an aligned orientation of the first spline (14) with respect to the second spline (20).

2. Connecting element according to Claim 1, **characterized in that** the elastomer body (16) is connected to the first spline element (12) and/or to the second spline element (18) by way of vulcanization.

3. Connecting element according to Claim 1 or 2, **characterized in that** the elastomer body (16) consists exclusively of an elastomeric plastic material.

4. Connecting element according to one of Claims 1 to 3, **characterized in that** the elastomer body (16) is arranged in the axial direction between the first spline element (12) and the second spline element (18).

5. Connecting element according to one of Claims 1 to 4, **characterized in that** the elastomer body (16) is configured substantially as a solid continuum, the elastomer body (16) configuring, in particular, a closed annular body which is solidly continuous in the circumferential direction.

6. Connecting element according to one of Claims 1 to 5, **characterized in that** the first spline (14) is rotated by an angle α in the circumferential direction in comparison with an aligned arrangement with respect to the second spline (20), it being valid that 0.10° ≤ α ≤ 5.0°, preferably 0.25° ≤ α 2.5°, further preferably 0.50° ≤ α ≤ 1.5° and particularly preferably α = 1.0° ± 0.25°.

7. Shaft/hub connection, in particular for the transmission of torque in a drive train of a motor vehicle, having a shaft and a hub which is connected to the shaft via an intermeshing spline connection, the shaft and/or the hub being configured as a connecting element (10) according to one of Claims 1 to 6.

8. Shaft/hub connection according to Claim 7, **characterized in that** the elastomer body (16) exerts a restoring moment M_{R} in the circumferential direction on the shaft and/or the hub, it being valid, in relation to a maximum torque fluctuation ΔM to be expected, that 0.01 ≤ M_{R}/ΔM ≤ 2.00, in particular 0.05 ≤ M_{R}/ΔM ≤ 1.00, preferably 0.10 ≤ M_{R}/ΔM ≤ 0.50 and particularly preferably 0.20 ≤ M_{R}/ΔM ≤ 0.25.

9. Drive train of a motor vehicle having a shaft/hub connection according to Claim 7 or 8 for connecting rotating parts, in particular for connecting a drive shaft of a motor vehicle engine to a torsional vibration damper and/or to a clutch, for connecting a torsional vibration damper to a clutch and/or for connecting a clutch plate of a clutch to a transmission input shaft of a motor vehicle transmission.

10. Use of a connecting element (10) according to one of Claims 1 to 6 in a shaft/hub connection, in particular according to Claim 7 or 8, for the transmission of torque in a drive train, in particular according to Claim 9, of a motor vehicle.

## Revendications

1. Elément de raccordement permettant d'assembler un arbre et un moyeu, en particulier pour la transmission d'un couple de rotation dans une chaîne cinématique d'un véhicule automobile, avec
un premier élément denté (12) présentant une première denture (14) pour la formation d'une denture d'engagement avec un élément denté opposé,
un deuxième élément denté (18) présentant une deuxième denture (20) pour la formation d'une denture d'engagement avec le même élément denté opposé, **caractérisé par** un corps élastomère (16) relié au premier élément denté (12) et au deuxième élément denté (18), dans lequel le corps élastomère (16) exerce, en cas d'orientation en alignement de la première denture (14) avec la deuxième denture (20), un couple de rappel en direction périphérique sur le premier élément denté (12) et/ou sur le deuxième élément denté (18).

2. Elément de raccordement selon la revendication 1, **caractérisé en ce que** le corps élastomère (16) est assemblé par vulcanisation au premier élément denté (12) et/ou au deuxième élément denté (18).

3. Elément de raccordement selon la revendication 1 ou 2, **caractérisé en ce que** le corps élastomère (16) se compose exclusivement d'un matériau de matière plastique élastomère.

4. Elément de raccordement selon l'une quelconque des revendications 1 à 3, **caractérisé en ce que** le corps élastomère (16) est disposé en direction axiale entre le premier élément denté (12) et le deuxième élément denté (18).

5. Elément de raccordement selon l'une quelconque des revendications 1 à 4, **caractérisé en ce que** le corps élastomère (16) est réalisé essentiellement en forme de continuum ininterrompu, dans lequel le corps élastomère (16) forme en particulier un corps annulaire fermé constamment continu en direction périphérique.

6. Elément de raccordement selon l'une quelconque des revendications 1 à 5, **caractérisé en ce que** la première denture (14), par comparaison avec un agencement aligné avec la deuxième denture (20), est tournée d'un angle α dans la direction périphérique, dans lequel on a 0,10° ≤ α ≤ 5,0°, de préférence 0,25° ≤ α ≤ 2,5°, de préférence encore 0,50° ≤ α ≤ 1,5° et particulièrement préférablement α = 1,0° ± 0,25°.

7. Assemblage d'un arbre et d'un moyeu, en particulier pour la transmission d'un couple de rotation dans une chaîne cinématique d'un véhicule automobile, avec un arbre et un moyeu assemblé à l'arbre par une denture d'engagement, dans lequel l'arbre et/ou le moyeu est configuré en forme d'élément de raccordement (10) selon l'une quelconque des revendications 1 à 6.

8. Assemblage d'un arbre et d'un moyeu selon la revendication 7, **caractérisé en ce que** le corps élastomère (16) exerce un couple de rappel M_{R} en direction périphérique sur l'arbre et/ou sur le moyeu, dans lequel, par rapport à une fluctuation maximale attendue ΔM du couple de rotation, on a 0,01 ≤ M_{R}/ΔM ≤ 2,00, en particulier 0,05 ≤ M_{R}/ΔM ≤ 1,00, de préférence 0,10 ≤ M_{R}/ΔM ≤ 0,50, et de préférence encore 0,20 ≤ M_{R}/ΔM ≤ 0,25.

9. Chaîne cinématique d'un véhicule automobile avec un assemblage d'un arbre et d'un moyeu selon la revendication 7 ou 8 pour l'assemblage de pièces tournantes, en particulier pour l'assemblage d'un arbre de commande d'un moteur de véhicule automobile avec un amortisseur de vibrations de torsion et/ou avec un embrayage, pour l'assemblage d'un amortisseur de vibrations de torsion avec un embrayage et/ou pour l'assemblage d'un disque d'embrayage d'un embrayage avec un arbre d'entrée de boîte de vitesses d'une boîte de vitesses de véhicule automobile.

10. Utilisation d'un élément de raccordement (10) selon l'une quelconque des revendications 1 à 6 dans un assemblage d'un arbre et d'un moyeu, en particulier selon la revendication 7 ou 8, pour la transmission d'un couple de rotation dans une chaîne cinématique, en particulier selon la revendication 9, d'un véhicule automobile.
